# FASCICULE DE BREVET EUROPEEN

(11) **EP 1 921 443 B1**
(45) Date de publication et mention de la délivrance du brevet: **14.10.2009**
(21) Numéro de dépôt: 07119724.8
(22) Date de dépôt: 31.10.2007
(51) Int. Cl.: G01N 25/18

(54) **Cellule de mesure de la conductivité thermique d'un gaz**
Zelle zur Messung der thermischen Leitfähigkeit eines Gases
Cell for measuring the thermal conductivity of a gas

(30) Priorité: 09.11.2006 FR 0654803
(43) Date de publication de la demande: 14.05.2008
(73) Titulaire: Actaris SAS, 92100 Boulogne-Billancourt (FR); Dalkia France, 59350 Saint-André (FR)
(72) Inventeur: Nexon, Pierre, 86800, Saint Julien l'Ars (FR); Charrier, Stéphane, 79100, Luzay (FR); Giraudet, Frédéric, 86280, Saint Benoît (FR)
(74) Mandataire: Hervouet, Sylvie

(56) Documents cités:
- WO-A-00/45163
- WO-A-93/08457
- DE-A1- 10 146 212
- US-A- 4 885 938
- US-A1- 2005 265 422

## Description

La présente invention concerne une cellule de mesure de la conductivité thermique d'un gaz à une température, un système de mesure de la conductivité thermique d'un gaz à deux températures comprenant deux desdites cellules, ainsi qu'un analyseur de gaz comprenant ledit système.

Elle s'applique notamment au domaine des analyseurs de gaz utilisant des méthodes corrélatives.

Les méthodes corrélatives utilisées dans les analyseurs de gaz nécessitent des mesures précises et fiables de la conductivité thermique d'un mélange gazeux à une ou plusieurs températures.

On connaît par exemple du document FR-2 827 961 une méthode corrélative qui permet de déterminer des propriétés énergétiques, telles que le pouvoir calorifique, du gaz naturel à partir de la mesure de la conductivité thermique d'un mélange gazeux équivalent.

Une détermination fiable des propriétés énergétiques dépendant de la mesure de la conductivité thermique est essentielle pour suivre les variations de la composition du gaz naturel de manière à pouvoir suivre sa qualité.

En effet, dans le domaine particulier des moteurs fonctionnant au gaz naturel, ces variations peuvent affecter leurs performances, voire causer de graves dommages.

Toutefois, la plupart des cellules actuelles de mesure de la conductivité thermique d'un gaz ne permettent pas d'obtenir une mesure suffisamment stable et précise.

L'imprécision des mesures est notamment due aux perturbations extérieures telles que les variations de débit et de pression du gaz, ou les variations de température.

Une des causes principales du défaut de stabilité est liée au fait que le capteur de mesure à l'intérieur de la cellule subit les variations de débit dudit gaz.

Ainsi, le niveau de précision de la mesure de la conductivité thermique ne peut être qu'au mieux de l'ordre de quelques centaines de µW/m.K.

WO 93/08457 décrit une cellule de mesure de la conductivité thermique d'un gaz comprenant un orifice d'entrée et un orifice de sortie du gaz, un canal de circulation du gaz agencé entre ledit orifice d'entrée et ledit orifice de sortie formant un chemin de circulation du gaz à l'intérieur de la cellule de mesure, et une chambre de mesure renfermant un capteur de conductivité thermique et communiquant avec une portion du dit canal par l'intermédiaire d'un ensemble d'écran de sorte que le gaz entre majoritairement par diffusion à l'intérieur de la chambre de mesure.

Par ailleurs, les cellules actuelles de mesure de la conductivité thermique d'un gaz présentent une structure de taille relativement volumineuse, ou encombrante, ce qui rend leur intégration difficile dans les analyseurs de gaz.

La présente invention propose une cellule de mesure de la conductivité thermique d'un gaz permettant d'éviter les problèmes de l'état de la technique liés d'une part, à la stabilité des mesures, en d'autres termes la répétabilité des mesures, effectuées par ladite cellule, et d'autre part, à la structure en tant que telle de ladite cellule.

Pour ce faire, la présente invention a pour objet une cellule de mesure de la conductivité thermique d'un gaz selon la revendication 1.

L'invention telle qu'ainsi définie permet ainsi de s'affranchir de l'influence des variations de débits du gaz.

De ce fait, la cellule de mesure de la conductivité thermique selon l'invention permet d'obtenir une mesure dont la précision est de seulement quelques dizaines de µW/m.K.

Ainsi, la vitesse du gaz est réduite au maximum et tend vers une valeur nulle au voisinage du capteur de conductivité thermique.

De plus, la cellule de mesure selon l'invention présente une structure très compacte, de taille peu volumineuse, ce qui facilite son intégration dans un système de mesure de la conductivité du gaz ou dans un analyseur de gaz.

L'orifice d'admission est de préférence situé sur l'axe longitudinal.

Avantageusement, le boîtier peut être de forme cylindrique, et positionné coaxialement à l'axe longitudinal de l'enveloppe.

La structure de la cellule de mesure présente ainsi une structure symétrique permettant d'assurer une compacité optimale.

Selon une caractéristique de l'invention, le boîtier comporte une partie formant support pour le capteur de conductivité thermique et d'un capot recouvrant ladite partie formant support, et en ce que le capot comprend l'orifice d'admission.

Dans un exemple particulier, lesdites première et deuxième parties du canal sont symétriques par rapport audit axe longitudinal.

De préférence, les première et deuxième parties du canal font partie intégrante de l'enveloppe.

La cellule de mesure peut comprendre en outre un moyen de chauffage homogène du gaz circulant dans le canal et du gaz contenu dans la chambre de mesure.

Ce moyen de chauffage permet de limiter tout gradient de température au sein de la cellule de mesure.

De préférence, l'enveloppe est en un matériau thermiquement conducteur et le moyen de chauffage comporte un fil résistif bobiné autour de l'enveloppe.

Selon une autre caractéristique, le capteur de conductivité thermique comprend une puce de mesure de la conductivité thermique et une sonde de température.

La cellule de mesure peut aussi comprendre une coque extérieure en matériau plastique, et une couronne isolante placée entre l'enveloppe et la coque extérieure.

Un autre objet de la présente invention est un système de mesure de la conductivité thermique d'un gaz à deux températures, caractérisé en ce qu'il comprend une première et une deuxième cellules de mesure selon l'invention, et un organe de découplage thermique comprenant un conduit de circulation du gaz mettant en communication l'orifice de sortie du gaz de la première cellule de mesure avec l'orifice d'entrée du gaz de la deuxième cellule de mesure à travers l'organe de découplage thermique.

L'organe de découplage thermique permet de limiter au maximum tous les transferts thermiques d'une cellule de mesure à l'autre.

Dans un exemple particulier, l'organe de découplage thermique est en PEEK.

Dans un mode de réalisation particulier, la température de la première cellule de mesure est inférieure à la température de la deuxième cellule de mesure, le gaz circulant de la première vers la deuxième cellule de mesure.

Un autre objet de la présente invention est un analyseur de gaz comprenant au moins une cellule de mesure de la conductivité thermique d'un gaz selon l'invention.

Un autre objet de la présente invention est un analyseur de gaz comprenant une partie monobloc comprenant un orifice d'entrée et un orifice de sortie du gaz, et un système de mesure selon l'invention, l'orifice d'entrée dudit analyseur étant en communication avec l'orifice d'entrée de la première cellule de mesure et l'orifice de sortie dudit analyseur étant en communication avec l'orifice de sortie de la deuxième cellule de mesure afin de permettre au gaz de circuler à l'intérieur de l'analyseur de gaz.

Avantageusement, l'orifice d'entrée et l'orifice de sortie de la partie monobloc sont situées dans un même plan de ladite partie.

Dans un mode de réalisation particulier, l'orifice d'entrée dudit analyseur communique avec l'orifice d'entrée de la première cellule de mesure par l'intermédiaire de l'organe de découplage thermique, et l'orifice de sortie dudit analyseur communique avec l'orifice de sortie de la deuxième cellule de mesure par l'intermédiaire de l'organe de découplage thermique.

L'organe de découplage thermique permet ainsi de limiter au maximum tous les transferts thermiques entre les cellules de mesure et la partie monobloc.

Selon une caractéristique de l'invention, la partie monobloc comprend un capteur de pression du gaz destiné à mesurer la pression du gaz circulant à l'intérieur de l'analyseur de gaz.

Selon une autre caractéristique de l'invention, l'analyseur de gaz comprend un organe déprimogène positionné sur le chemin du gaz entre la chambre de mesure de la deuxième cellule de mesure et l'orifice de sortie dudit analyseur de gaz.

D'autres caractéristiques et avantages de la présente invention apparaîtront à la lumière de la description d'un exemple non limitatif d'une cellule de mesure de la conductivité thermique d'un gaz à une température, d'un système de mesure comprenant deux desdites cellules, et d'un analyseur de gaz comprenant ledit système conformément à l'invention faite en référence aux figures annotées, dans lesquelles :
- la figure 1 représente une vue partielle en coupe d'une cellule de mesure de la conductivité thermique d'un gaz à une température selon un mode de réalisation préféré conforme à l'invention,
- la figure 2 représente une vue éclatée en perspective d'une cellule de mesure de la figure 1 comprenant en outre des moyens d'isolation thermique conforme à l'invention,
- la figure 3 représente une vue schématique d'un analyseur de gaz comprenant un système de mesure de la conductivité thermique d'un gaz à deux températures conforme à l'invention, et
- la figure 4 représente une vue en perspective de l'analyseur de gaz de la figure 3.

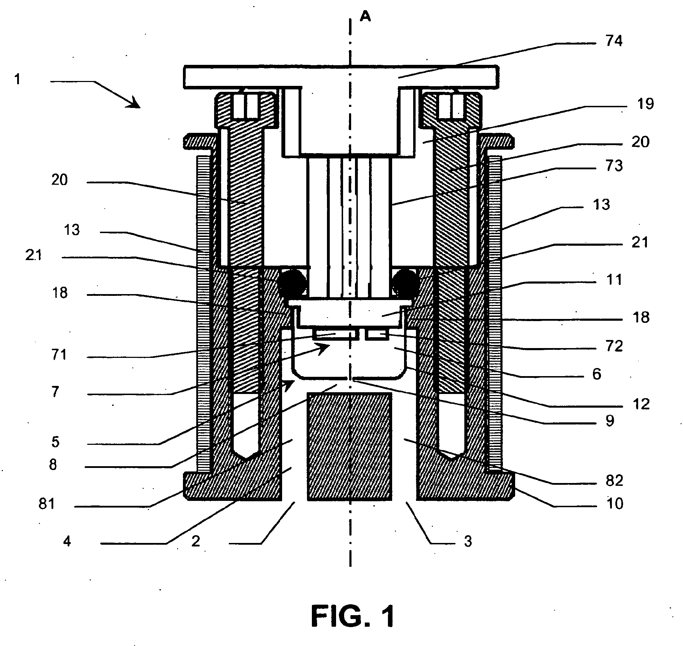

Comme représenté sur la figure 1, la cellule de mesure 1 de la conductivité thermique d'un gaz selon l'invention comprend un orifice d'entrée 2 et un orifice de sortie 3 du gaz.

Un canal 4 de circulation du gaz est agencé entre ledit orifice d'entrée 2 et ledit orifice de sortie 3 de sorte à former un chemin de circulation du gaz à l'intérieur de la cellule de mesure 1.

La cellule de mesure 1 comprend également un boîtier 5 formant chambre 6 de mesure qui renferme un capteur 7 de conductivité thermique et protège ainsi le capteur 7 de l'arrivée d'un flux de gaz directement sur ledit capteur.

Selon la figure 1, la chambre 6 de mesure communique directement avec une portion 8 dudit canal par l'intermédiaire d'un unique orifice d'admission 9 du gaz dudit boîtier, ledit orifice d'admission étant réalisé à travers l'épaisseur du boitier 5.

Selon une caractéristique importante de l'invention, ledit orifice d'admission 9 est situé dans un plan orienté par rapport au chemin de circulation du gaz dans ladite portion 8 du canal de circulation du gaz de sorte que le gaz entre en majorité par diffusion par ledit orifice d'admission 9 à l'intérieur de la chambre 6 de mesure.

Dans le mode de réalisation préféré représenté sur la figure 1, la portion 8 s'étend de manière à ce que le gaz circule sensiblement parallèlement audit plan de l'orifice d'admission 9.

Dans ce cas, la vitesse du gaz est réduite au maximum et tend vers une valeur nulle au voisinage du capteur 7 de conductivité thermique.

Par conséquent, le gaz entrant à l'intérieur du boîtier 5 est renouvelé par diffusion et les variations de débit du gaz au niveau du capteur 7 de conductivité dans la chambre 6 de mesure sont limitées de façon significative.

La cellule de mesure 1 selon la présente invention permet ainsi de limiter avantageusement le défaut de stabilité des mesures de la conductivité thermique d'un gaz liés aux variations du débit du gaz.

Dans le mode de réalisation préféré tel que représenté, la structure de la cellule de mesure présente en outre une structure symétrique permettant d'assurer une compacité optimale.

Plus précisément, le boîtier 5 est placé à l'intérieur d'une enveloppe 10 de forme sensiblement cylindrique s'étendant selon un axe longitudinal A.

Le boîtier 5 comprend une partie 11 formant support pour le capteur 7 de conductivité thermique et un capot 12 recouvrant ladite partie formant support.

Pour assurer une compacité optimale de la cellule de mesure, le boîtier 5 est du type cylindre droit et est positionné avantageusement coaxialement à l'axe longitudinal A de l'enveloppe 10.

En d'autres termes, l'axe longitudinal dudit boîtier 5 est identique à l'axe longitudinal A de l'enveloppe 10.

La partie 11 formant support est en forme de disque et correspond à une des bases du cylindre, le boîtier 12 comprenant l'autre base du cylindre.

Le capot 12 dudit boîtier comprend l'orifice d'admission 9, ce dernier pourrait être situé n'importe où sur le capot à condition que les conditions de diffusion du gaz à l'intérieur du boîtier 5 soient respectées.

Toutefois, par soucis de symétrie, l'orifice d'admission 9 du gaz est situé au centre de la base dudit capot, le plan de l'orifice d'admission 9 étant perpendiculaire à l'axe longitudinal A.

Il en résulte que le gaz circule dans la portion 8 du canal parallèlement à surface de la base du capot 12.

De préférence, l'orifice d'admission 9 présente une section circulaire de diamètre inférieur à 3 mm, par exemple de l'ordre de 1 mm pour optimiser le phénomène de diffusion du gaz à l'intérieur de la chambre de mesure.

Le canal 4 de circulation du gaz comprend une première partie 81 communiquant avec l'orifice d'entrée 2 et ladite portion 8 dudit canal, et une deuxième partie 82 communiquant avec ladite portion 8 et l'orifice de sortie 3.

Avantageusement, ces première et deuxième parties 81, 82 sont parallèles et symétriques par rapport à l'axe longitudinal A de l'enveloppe 10 et permettent d'obtenir une cellule de mesure 1 présentant une compacité optimale.

Pour garantir une bonne étanchéité au niveau la cellule de mesure sans avoir recours à des tubes ou des raccords gaz, l'enveloppe 10 présente une extrémité fermée dans laquelle sont usinées lesdites première et deuxième parties 81, 82.

En d'autres termes, les première et seconde parties 81, 82 du canal font partie intégrante de l'enveloppe 10.

L'enveloppe 10 comprend en outre une protubérance annulaire 18 permettant à la partie 11 formant support dudit boîtier de venir en butée sur ladite protubérance annulaire.

Ce positionnement permet de former la portion 8 du canal, ladite portion 8 étant ainsi délimitée par l'extrémité fermée de l'enveloppe 10 et par la base du capot 12.

Sur la partie 11 formant support est fixé le capteur 7 de conductivité thermique comprenant une puce 71 de mesure de la conductivité thermique et une sonde 72 de température.

Avantageusement, la puce 71 et la sonde 72 sont fixées de façon adjacente sur la partie 11 formant support de sorte à optimiser la régulation de température dans la chambre 6 de mesure.

La sonde 72 de température est intégrée au sein même du capteur 7 de conductivité thermique, au plus près de la puce 71.

Ainsi, la régulation de la température peut se faire précisément au plus près du point de mesure de la conductivité thermique.

Les connexions 73 du capteur passent à travers une ouverture réalisée dans la partie formant support 11, lesdites connexions étant reliées à un circuit imprimé 74.

Le circuit imprimé 74 est une interface entre le capteur 7 de conductivité thermique et une carte électronique numérique d'acquisition et de traitement de données (non représentée), ladite carte électronique d'acquisition étant connectée électriquement au circuit imprimé 74.

Pour s'affranchir de la variation de température entre l'extérieur de la cellule de mesure 1 et l'intérieur de la chambre 6 de mesure, la température du gaz circulant dans le canal 4 doit être de préférence sensiblement la même que la température mesurée à l'intérieur de la chambre 6 de mesure par la sonde 72 de température.

Pour ce faire, un moyen de chauffage 13 est agencé autour de ladite enveloppe pour limiter tout gradient de température au sein de la cellule de mesure 1, ce moyen de chauffage 13 étant du type surfacique.

Il permet de chauffer de façon homogène le gaz circulant dans le canal 4 et le gaz contenu dans la chambre 6 de mesure.

La température à l'intérieur de la chambre 6 de mesure est régulée grâce au moyen de chauffage 13 par l'intermédiaire de la sonde 72 de température.

Pour ce faire, la carte électronique numérique d'acquisition et de traitement de données intègre périodiquement les mesures de température effectuées par la sonde 72 de température.

Ces mesures sont traitées par un algorithme de régulation de type PID (acronyme mis pour Proportionnelle Intégrale Dérivée) qui permet de calculer périodiquement la puissance électrique à fournir au moyen de chauffage 13.

Enfin, un circuit de puissance (non représenté) fournit au moyen de chauffage 13 la puissance nécessaire au maintien de la température autour d'un point de consigne.

Le moyen de chauffage 13 est par exemple un fil résistif bobiné autour de l'enveloppe 10 de la cellule de mesure.

Ainsi, le capteur 7 de conductivité thermique, notamment la puce 71, n'est pas perturbé par une variation brusque de la température du gaz lors de son entrée dans la chambre 6 de mesure.

Pour assurer une bonne conductivité thermique et obtenir un chauffage homogène, l'enveloppe 10 et le boîtier 5 sont en des matériaux thermiquement conducteurs, notamment l'enveloppe 10 et le boîtier 5 sont en acier.

Ledit canal 4 peut être dimensionné de sorte à optimiser ce préchauffage en prenant en compte différents paramètres bien connus de l'homme du métier, à savoir :
- la puissance de chauffage,
- la température à l'entrée du canal 4,
- la température à la sortie du canal 4,
- la température de préchauffage du gaz,
- la température de chauffe du gaz circulant dans le boîtier 5, et
- le débit du gaz.

Pour utiliser la cellule de mesure 1 selon l'invention dans un analyseur de gaz, la cellule de mesure, en tant que telle, doit de préférence être isolée thermiquement des perturbations liées à la température extérieure.

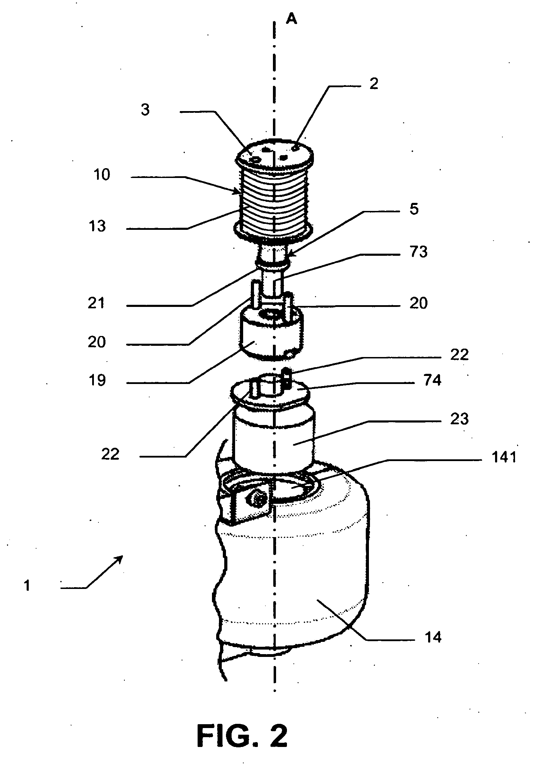

Pour ce faire, une couronne isolante, non représentée sur la figure 2, est placée autour de l'enveloppe 10.

Cette couronne isolante est par exemple de la laine de verre d'environ 20 mm d'épaisseur.

Afin de maintenir la laine de verre autour de l'enveloppe 10, la cellule de mesure 1 comporte une coque extérieure 14 en matière plastique telle que représentée sur la figure 2.

Cette coque extérieure 14 est de préférence en copolymère d'acrylonitrile, de butadiène et de styrène (ABS).

La laine de verre est ainsi placée entre l'enveloppe 10 et la coque extérieure 14 pour garantir une meilleure isolation.

La coque extérieure 14, par exemple de forme cylindrique, comporte à une extrémité une ouverture 141 permettant d'avoir facilement accès aux orifices d'entrée 2 et de sortie 3 de la cellule de mesure.

Afin d'éviter d'endommager thermiquement le circuit imprimé 74 et d'éviter les déperditions thermiques préjudiciables à la régulation de température, une pièce isolante 19, selon les figures 1 et 2, est positionnée à l'intérieur de l'enveloppe 10 entre la partie formant support 11 et le circuit imprimé 74.

Ladite pièce isolante 19 est de forme cylindrique de sorte à être positionnée coaxialement avec l'axe longitudinal A.

Avantageusement, le matériau choisi pour la pièce isolante 19 est du PEEK (Poly-Ether-Ether-Ketone)

Le PEEK est un matériau polymère de très faible conductivité thermique, inerte chimiquement et résistant aux hautes températures.

Elle comprend en son centre une ouverture destinée à laisser passer les connexions 73 du capteur de conductivité thermique.

Ladite pièce isolante 19 est fixée par des moyens de fixation 20 à l'enveloppe 10 en écrasant un joint torique 21 d'étanchéité positionné entre la partie 11 formant support pour le capteur 7 de conductivité thermique et la pièce isolante 19, garantissant ainsi une étanchéité pneumatique.

Le circuit imprimé 74 est, quant à lui, fixé également par d'autres moyens de fixation 22 sur la pièce isolante 19, ces moyens de fixation 22 étant visibles seulement sur la figure 2.

Pour améliorer encore l'isolation thermique avec l'extérieur, un bouchon 23 isolant, par exemple en mousse polyimide, est placé à l'intérieur de la coque extérieure 14 entre le circuit imprimé 74 et ladite coque extérieure 14.

Par exemple, ledit bouchon 23 est de forme cylindrique et peut être positionné coaxialement à l'axe longitudinal A.

La cellule de mesure 1 ainsi constituée s'affranchit de façon significative des variations extérieures de température et permet d'optimiser la précision et la stabilité des mesures par le capteur 7 de conductivité thermique.

De plus, la température à l'intérieur de la chambre de mesure est régulée précisément à plus ou moins 0,01 °C.

La cellule de mesure selon la présente invention peut être utilisée au sein même d'un analyseur de gaz.

Pour mesurer la conductivité thermique d'un gaz à au moins deux températures, au moins deux cellules de mesure telles que précédemment décrites peuvent être utilisées.

Un système de mesure 200 à deux cellules de mesures selon l'invention est représenté sur les figures 300 et 400 dans son utilisation au sein d'un analyseur de gaz 300.

Ce système de mesure 200 comporte une première et une deuxième cellules de mesure 101, 102 et un organe de découplage thermique 150.

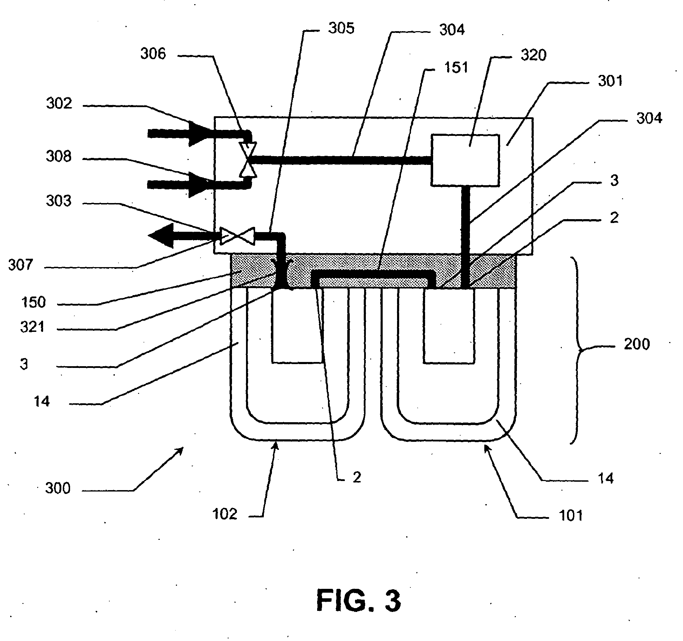

Comme représenté schématiquement sur la figure 3, on réalise une mise en série de la première et de la deuxième cellules de mesure 101, 102 à l'aide de l'organe de découplage thermique 150 ou en d'autres termes d'un support « manifold », de préférence en PEEK, qui permet de garantir un découplage thermique entre chaque cellule de mesure 101, 102.

L'organe de découplage thermique 150 permet de limiter au maximum tous les transferts thermiques d'une cellule de mesure à l'autre.

En effet, ces transferts thermiques peuvent entraîner des perturbations préjudiciables à la stabilité de l'asservissement de température de chaque cellule de mesure 101, 102.

L'organe de découplage thermique 150 comprend un conduit 151 de circulation du gaz mettant en communication l'orifice de sortie 3 du gaz de la première cellule de mesure 101 avec l'orifice d'entrée 2 du gaz de la deuxième cellule de mesure 102 à travers ledit organe de découplage thermique.

Le conduit de circulation 151 est avantageusement directement usiné à l'intérieur de l'organe de découplage thermique 150.

Le gaz circulant de la première cellule de mesure 101 vers la deuxième cellule de mesure 102, il est préférable de placer en série la première cellule de mesure 101 suivie de la deuxième cellule de mesure 102 lorsque la température de la première cellule de mesure 101, par exemple 67°C, est inférieure à la température de la deuxième cellule de mesure 102, par exemple 113°C.

Bien entendu, le système de mesure 200 permettant la mesure à deux températures différentes peut être généralisé en plaçant autant de cellules de mesure en série reliées entre elles au moyen de l'organe de découplage thermique et en prévoyant autant de conduits que nécessaires.

Le système de mesure 200 peut être intégré dans tout équipement, par exemple dans un analyseur de gaz 300.

Ainsi, les deux cellules de mesure 101, 102 communiquent avec une partie monobloc 301 de l'analyseur de gaz par l'intermédiaire de l'organe de découplage thermique 150.

L'organe de découplage thermique 150 permet ainsi de limiter au maximum tous les transferts thermiques entre les cellules de mesure 101, 102 et la partie monobloc 301.

La partie monobloc 301 de forme parallélépipédique présente une face regroupant un orifice d'entrée 302 et un orifice de sortie 303 du gaz de l'analyseur 300.

L'orifice d'entrée 302 dudit analyseur est en communication avec l'orifice d'entrée 2 de la première cellule de mesure 101 et l'orifice de sortie 303 dudit analyseur est en communication avec l'orifice de sortie 3 de la deuxième cellule de mesure 202, afin de permettre au gaz de circuler à l'intérieur de l'analyseur de gaz.

Plus particulièrement, le gaz entre tout d'abord par l'orifice d'entrée 302 de l'analyseur et circule à l'intérieur de la partie monobloc 301, de préférence en acier inoxydable, dans lequel sont usinés un premier et un deuxième chemins 304, 305 de circulation du gaz.

Une première électrovanne 306 agissant sur le premier chemin 304 de circulation du gaz à proximité de l'orifice d'entrée 302 de l'analyseur permet de contrôler le flux du gaz à l'intérieur de l'analyseur 300.

Elle permet également de contrôler sélectivement l'entrée d'un autre gaz, tel qu'un gaz étalon, à l'intérieur de l'analyseur par l'intermédiaire d'une autre entrée 308.

Le premier chemin 304 de circulation du gaz amène le gaz à l'orifice d'entrée 2 de la première cellule de mesure 101 en traversant l'organe de découplage thermique 150.

Le gaz circule ainsi à l'intérieur de la première cellule de mesure 101 jusqu'à son orifice de sortie 3.

Ensuite, après avoir traversé l'organe de découplage thermique 150 grâce au conduit 151 tel que décrit précédemment, le gaz circule à l'intérieur de la deuxième cellule de mesure 102 jusqu'à l'orifice de sortie 3 de ladite deuxième cellule de mesure.

Puis le gaz traverse l'organe de découplage thermique 150 pour circuler dans le deuxième chemin 305 de circulation du gaz et arrive à l'orifice de sortie 303 de l'analyseur de gaz.

Une deuxième électrovanne 307, placée à proximité de l'orifice de sortie 303 de l'analyseur, permet également de contrôler le flux du gaz à l'intérieur dudit analyseur.

De plus, elle permet notamment de fermer le circuit de gaz pour éviter toute consommation de gaz lorsque l'analyseur de gaz est hors tension.

L'analyseur de gaz 300 tel que représenté schématiquement sur la figure 3 comprend en outre un capteur de pression 320 du gaz destiné à mesurer la pression du gaz circulant à l'intérieur dudit analyseur.

Ce capteur de pression 320 permet de s'affranchir à moindre coût des perturbations liées aux variations de pression du gaz et est positionné de façon à mesurer la pression avant l'entrée du gaz dans la première cellule de mesure 101.

Plus particulièrement, ledit capteur de pression est positionné au niveau du premier chemin 304 de circulation du gaz à l'intérieur de la partie monobloc 301 de l'analyseur.

La mesure de la pression permet ainsi, via un algorithme de calcul, de corriger le signal fourni par le capteur 7 de conductivité thermique de chaque cellule de mesure 101, 102.

Pour de faibles variations de pression, par exemple inférieures à quelques centaines de millibars, la conductivité thermique évolue de façon quasi-linéaire avec la pression.

Ainsi, la connaissance préalable du coefficient de variation, exprimé en µW/m.K par mbar, permet de corriger numériquement la valeur mesurée de conductivité thermique.

L'analyseur de gaz 300 peut comprendre d'autres types de capteurs de manière à mesurer d'autres propriétés physiques du gaz pour la détermination de propriétés énergétiques par l'intermédiaire des méthodes corrélatives.

L'analyseur de gaz 300 peut également comprendre un organe déprimogène 321, de type diaphragme, positionné sur le trajet de circulation du gaz entre la chambre de mesure de la deuxième cellule de mesure 102 et l'orifice de sortie 303 de l'analyseur de gaz.

Par exemple et comme représenté sur la figure 3, le diaphragme est positionné à l'intérieur de l'organe de découplage thermique 150 à proximité de l'orifice de sortie 3 de la deuxième cellule de mesure 102.

L'organe déprimogène 321 permet ainsi d'améliorer le préchauffage du gaz à l'intérieur du canal 4 de circulation du gaz.

En effet, le débit du gaz est ainsi ralenti dans ledit canal ce qui permet d'atteindre la température de mesure souhaitée plus rapidement selon l'optimisation des différents paramètres tels que la puissance de chauffage, la température à l'entrée du canal, la température à la sortie du canal, la température de préchauffage du gaz, la température de chauffe du gaz circulant dans le boîtier.

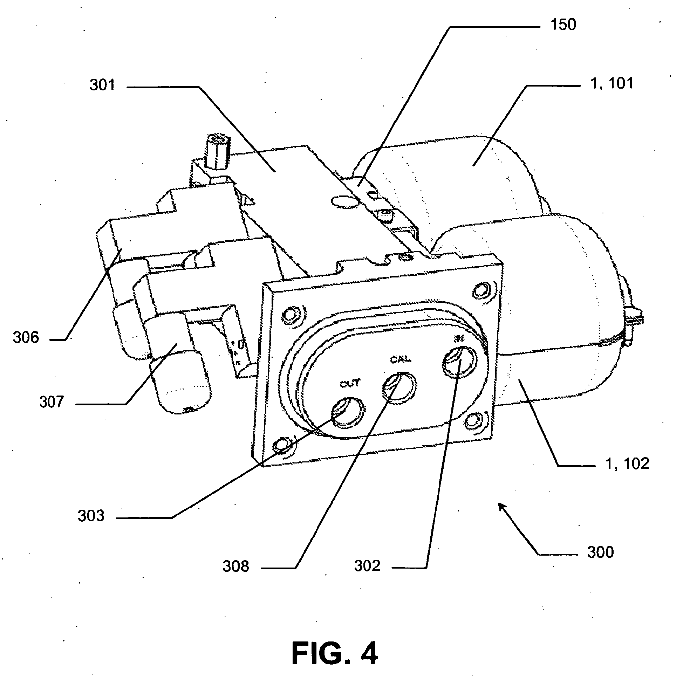

La figure 4 représente l'analyseur de gaz 300 en perspective comprenant la partie monobloc 301, les deux électrovannes 306, 307, et le système de mesure avec les première et deuxième cellules de mesure 101, 102 ensemble avec l'organe de découplage thermique 150.

La partie monobloc 301 et le système de mesure s'agencent parfaitement pour former un analyseur compact.

La compacité et l'intégration des deux cellules de mesure 101, 102 de la conductivité thermique ensemble avec l'organe de découplage thermique 150 et la partie monobloc 301 permettent de réaliser un analyseur de gaz 300 où tous ces éléments s'intègrent sans avoir recours à des tubes et des raccords de gaz, les problèmes d'étanchéités étant ainsi limités.

De façon particulièrement avantageuse, l'analyseur de gaz selon la présente invention présente une taille limitée pour une installation industrielle facilité et permet un montage rapide.

Les orifices d'entrées 302, 308 et sortie 303 de l'analyseur de gaz sont regroupés sur une même face de la partie monobloc dudit analyseur comme représenté sur la figure 4, et permettent ainsi un accès facile à l'utilisateur.

Le gain de stabilité et la précision sur la mesure de la conductivité thermique permettent d'améliorer de façon significative les performances métrologiques des analyseurs de gaz utilisant cette mesure.

Lors de la mesure de la conductivité thermique, le rejet des perturbations extérieures telles que :
- les variations de débit du gaz,
- les variations de pression,
- les variations de température entre l'extérieur et l'intérieur de la cellule, et/ou
- les variations de température du gaz entre l'intérieur du canal de circulation du gaz et l'intérieur de la chambre de mesure,
permet d'utiliser avantageusement la cellule de mesure 1, 101, 102 selon la présente invention dans un environnement industriel.

Les moyens mis en oeuvre pour s'affranchir de telles perturbations peuvent être utilisés seuls ou en combinaison au niveau de la cellule de mesure, du système de mesure comprenant au moins deux desdites cellules et/ou de l'analyseur de gaz comprenant au moins une cellule.

## Revendications

1. Cellule de mesure (1) de la conductivité thermique d'un gaz comprenant :
- un orifice d'entrée (2) et un orifice de sortie (3) du gaz,
- un canal (4) de circulation du gaz agencé entre ledit orifice d'entrée et ledit orifice de sortie formant un chemin de circulation du gaz à l'intérieur de la cellule de mesure, ledit canal de circulation du gaz comprenant :
- une première partie (81) communiquant avec une portion (8) dudit canal et l'orifice d'entree (2), et
- une deuxiéme partie (82) communiquent avec ladite portion (8) et l'orifice de sortie (3), et
- un boîtier (5) formant chambre (6) de mesure renfermant un capteur (7) de conductivité thermique et communiquant avec une portion (8) dudit canal par l'intermédiaire d'un orifice d'admission (9) du gaz dudit boîtier, l'orifice d'admission étant situé dans un plan orienté par rapport au chemin de circulation du gaz dans ladite portion du canal de circulation du gaz de sorte que le gaz entre majoritairement par diffusion par ledit orifice d'admission (9) à l'intérieur de la chambre (6) de mesure,
ladite cellule de mesure étant **caractérisée en ce qu'**elle comporte une enveloppe (10) de forme sensiblement cylindrique s'étendant selon un axe longitudinal (A), le boîtier (5) étant disposé à l'intérieur de ladite enveloppe (10), et **en ce que** les première et deuxième parties (81, 82) s'étendent sensiblement parallèlement à l'axe longitudinal (A) de l'enveloppe (10), de part et d'autre dudit axe longitudinal (A), et la portion (8) du canal de circulation du gaz s'étend perpendiculairement à l'axe longitudinal (A).

2. Cellule de mesure selon la revendication 1, **caractérisée en ce que** l'orifice d'admission (9) est situé sur l'axe longitudinal (A).

3. Cellule de mesure selon la revendication 1 ou 2, **caractérisée en ce que** le boîtier (5) est de forme cylindrique, et est positionné coaxialement à l'axe longitudinal (A) de l'enveloppe (10).

4. Cellule de mesure selon l'une quelconque des revendications précédentes, **caractérisée en ce que** le boîtier (5) comporte une partie (11) formant support pour le capteur de conductivité thermique et d'un capot (12) recouvrant ladite partie formant support, et **en ce que** le capot (12) comprend l'orifice d'admission (9).

5. Cellule de mesure selon l'une quelconque des revendications précédentes, **caractérisée en ce que** lesdites première et deuxième parties (81, 82) du canal sont symétriques par rapport audit axe longitudinal (A).

6. Cellule de mesure selon l'une quelconque des revendications précédentes, **caractérisée en ce que** les première et deuxième (81, 82) parties du canal font partie intégrante de l'enveloppe (10).

7. Cellule de mesure selon l'une quelconque des revendications précédentes, **caractérisée en ce qu'**elle comprend en outre un moyen de chauffage (13) homogène du gaz circulant dans le canal (4) et du gaz contenu dans la chambre (6) de mesure.

8. Cellule de mesure selon la revendication 7, **caractérisée en ce que** l'enveloppe (10) est en un matériau thermiquement conducteur, et **en ce que** le moyen de chauffage (13) comporte un fil résistif bobiné autour de l'enveloppe (10).

9. Cellule de mesure selon l'une quelconque des revendications précédentes, **caractérisé en ce que** le capteur (7) de conductivité thermique comprend une puce (71) de mesure de la conductivité thermique et une sonde (72) de température.

10. Cellule de mesure selon l'une quelconque des revendications précédentes, **caractérisée en ce qu'**elle comprend une coque extérieure (14) en matériau plastique, et **en ce qu'**une couronne isolante est placée entre l'enveloppe (10) et la coque extérieure (14).

11. Système de mesure (200) de la conductivité thermique d'un gaz à deux températures, **caractérisé en ce qu'**il comprend :
- une première et une deuxième cellules de mesure (1, 101, 102) selon la revendication 10, et
- un organe de découplage thermique (150) comprenant un conduit (151) de circulation du gaz mettant en communication l'orifice de sortie (3) du gaz de la première cellule de mesure (101) avec l'orifice d'entrée (2) du gaz de la deuxième cellule de mesure (102) à travers l'organe de découplage thermique (150).

12. Système de mesure selon la revendication 11, **caractérisé en ce** la température de la première cellule de mesure (101) est inférieure à la température de la deuxième cellule de mesure (102), le gaz circulant de la première vers la deuxième cellule de mesure.

13. Système de mesure selon la revendication 11 ou 12, **caractérisé en ce que** l'organe de découplage thermique (150) est en PEEK.

14. Analyseur de gaz (300) comprenant au moins une cellule de mesure (1, 101, 102) de la conductivité thermique d'un gaz selon les revendications 1 à 10.

15. Analyseur de gaz (300), **caractérisé en ce qu'**il comprend :
- une partie monobloc (301) comprenant un orifice d'entrée (302) et un orifice de sortie (303) du gaz, et
- un système de mesure (200) selon les revendications 11 à 13,
l'orifice d'entrée (302) dudit analyseur étant en communication avec l'orifice d'entrée (2) de la première cellule de mesure (101) et l'orifice de sortie (303) dudit analyseur étant en communication avec l'orifice de sortie (3) de la deuxième cellule de mesure (102) afin de permettre au gaz de circuler à l'intérieur de l'analyseur de gaz.

16. Analyseur de gaz (300) selon la revendication 15, **caractérisé en ce que** l'orifice d'entrée (302) et l'orifice de sortie (303) de la partie monobloc (301) sont situées dans un même plan de ladite partie.

17. Analyseur de gaz selon la revendication 15 ou 16, **caractérisé en ce que** l'orifice d'entrée (302) dudit analyseur communique avec l'orifice d'entrée (2) de la première cellule de mesure (101) par l'intermédiaire de l'organe de découplage thermique (150), et l'orifice de sortie (303) dudit analyseur communique avec l'orifice de sortie (3) de la deuxième cellule de mesure (102) par l'intermédiaire de l'organe de découplage thermique (150).

18. Analyseur de gaz selon l'une quelconque des revendications 15 à 17, **caractérisé en ce que** la partie monobloc (301) comprend un capteur de pression (320) du gaz destiné à mesurer la pression du gaz circulant à l'intérieur de l'analyseur de gaz.

19. Analyseur de gaz selon l'une quelconque des revendications 15 à 18, **caractérisé en ce qu'**il comprend un organe déprimogène (321) positionné sur le chemin du gaz entre la chambre (6) de mesure de la deuxième cellule de mesure (102) et l'orifice de sortie (303) dudit analyseur de gaz.

## Claims

1. A cell (1) for measuring the heat conductivity of a gas comprising:
- a gas inlet orifice (2) and a gas outlet orifice (3),
- a gas flow channel (4) laid out between said inlet orifice and said outlet orifice forming a gas flow path inside the measuring cell, said gas flow channel comprising:
- a first portion (81) communicating with a portion (8) of said channel and the inlet orifice (2), and
- a second portion (82) communicating with said portion (8) and the outlet orifice (3), and
- a casing (5) forming a measuring chamber (6) containing a heat conductivity sensor (7) and communicating with a portion (8) of said channel via a gas admission orifice (9) of said casing, the admission orifice being located in a plane oriented relatively to the gas flow path in said portion of the gas flow channel so that the gas enters the interior of the measuring chamber (6), in majority by diffusion through said admission orifice (9),
said measuring cell being **characterized in that** it includes a case (10) of substantially cylindrical shape extending along a longitudinal axis (A), the casing (5) being positioned inside said case (10), and **in that** the first and second portions (81, 82) extend substantially parallel to the longitudinal axis (A) of the case (10), on either side of said longitudinal axis (A), and the portion (8) of the gas flow channel extends perpendicularly to the longitudinal axis (A).

2. The measuring cell according to claim 1, **characterized in that** the admission orifice (9) is located on the longitudinal axis (A).

3. The measuring cell according to claim 1 or 2, **characterized in that** the casing (5) is of cylindrical shape, and is positioned coaxially with the longitudinal axis (A) of the case (10).

4. The measuring cell according to any of the preceding claims, **characterized in that** the casing (5) includes a portion (11) forming a support for the heat conductivity sensor and a cover (12) covering said support-forming portion, and **in that** the cover (12) comprises the admission orifice (9).

5. The measuring cell according to any of the preceding claims, **characterized in that** said first and second portions (81, 82) of the channel are symmetrical relatively to said longitudinal axis (A).

6. The measuring cell according to any of the preceding claims, **characterized in that** said first and second portions (81, 82) of the channel are an integral part of the case (10).

7. The measuring cell according to any of the preceding claims, **characterized in that** it further comprises a means (13) for homogeneously heating the gas flowing in the channel (4) and the gas contained in the measuring chamber (6).

8. The measuring cell according to claim 7, **characterized in that** the case (10) is in heat-conducting material, and **in that** the heating means (13) includes a resistive wire wound around the case (10).

9. The measuring cell according to any of the preceding claims, **characterized in that** the heat conductivity sensor (7) comprises a chip (71) for measuring heat conductivity and a temperature probe (72).

10. The measuring cell according to any of the preceding claims, **characterized in that** it comprises an outer shell (14) in plastic, and **in that** an insulating crown is placed between the case (10) and the outer shell (14).

11. A system (200) for measuring the heat conductivity of a gas at two temperatures, **characterized in that** it comprises:
- first and second measuring cells (1, 101, 102) according to claim 10, and
- a heat decoupling member (150) comprising a gas flow conduit (151) having the gas outlet orifice (3) of the first measuring cell (101) communicate with the gas inlet orifice (2) of the second measuring cell (102) through the heat decoupling member (150).

12. The measuring system according to claim 11, **characterized in that** the temperature of the first measuring cell (101) is less than the temperature of the second measuring cell (102), the gas flowing from the first to the second measuring cell.

13. The measuring system according to claim 11 or 12, **characterized in that** the heat decoupling member (150) is in PEEK.

14. A gas analyzer (300) comprising at least one cell (1, 101, 102) for measuring the heat conductivity of a gas, according to claims 1 to 10.

15. A gas analyzer (300) **characterized in that** it comprises:
- a one-piece portion (301) comprising a gas inlet orifice (302) and a gas outlet orifice (303), and
- a measuring system according to claims 11 to 13,
the inlet orifice (302) of said analyzer being in communication with the inlet orifice (2) of the first measuring cell (101) and the outlet orifice (303) of said analyzer being in communication with the outlet orifice (3) of the second measuring cell (102) so as to allow the gas to flow inside the gas analyzer.

16. The gas analyzer (300) according to claim 15, **characterized in that** the inlet orifice (302) and the outlet orifice (303) of the one-piece portion (301) are located in the same plane of said portion.

17. The gas analyzer according to claim 15 or 16, **characterized in that** the inlet orifice (302) of said analyzer communicates with the inlet orifice (2) of the first measuring cell (101) via the heat decoupling member (150), and the outlet orifice (303) of said analyzer communicates with the outlet orifice (3) of the second measuring cell (102) via the heat decoupling member (150).

18. The gas analyzer according to any of the claims 15 to 17, **characterized in that** the one-piece portion (301) comprises a gas pressure sensor (320) intended for measuring the pressure of the gas flowing inside the gas analyzer.

19. The gas analyzer according to any of the claims 15 to 18, **characterized in that** it comprises a vacuum-forming member (321) positioned on the gas path between the measuring chamber (6) of the second measuring cell (102) and the outlet orifice (3) of said gas analyzer.

## Patentansprüche

1. Zelle (1) zum Messen der Wärmeleitfähigkeit eines Gases, umfassend:
- eine Eingangsöffnung (2) und eine Ausgangsöffnung (3) des Gases,
- einen Gasumlaufkanal (4), der zwischen der Eingangsöffnung und der Ausgangsöffnung angeordnet ist und einen Gasumlaufweg im Innern der Messzelle bildet, wobei der Gasumlaufkanal folgendes umfasst:
- einen ersten Teil (81), der mit einem Abschnitt (8) des Kanals und der Eingangsöffnung (2) in Verbindung steht, und
- einen zweiten Teil (82), der mit dem Abschnitt (8) und der Ausgangsöffnung (3) in Verbindung steht, und
- ein Gehäuse (5), das eine Messkammer (6) bildet, die einen Wärmeleitfähigkeitssensor (7) einschließt und mit einem Abschnitt (8) des Kanals über eine Gaseinlassöffnung (9) des Gehäuses in Verbindung steht, wobei die Einlassöffnung sich auf einer Ebene befindet, die im Verhältnis zu dem Gasumlaufweg in dem Abschnitt des Gasumlaufkanals ausgerichtet ist, so dass das Gas zum größten Teil durch Diffusion durch die Einlassöffnung (9) hindurch ins Innere der Messkammer (6) eintritt,
wobei die Messzelle **dadurch gekennzeichnet ist, dass** sie eine im Wesentlichen zylindrisch geformte Ummantelung (10) umfasst, die sich an einer Längsachse (A) entlang erstreckt, wobei das Gehäuse (5) im Innern der Ummantelung (10) angeordnet ist, und dass die ersten und zweiten Teile (81, 82) sich im Wesentlichen parallel zur Längsachse (A) der Ummantelung (10) auf beiden Seiten der Längsachse (A) erstrecken, und der Abschnitt (8) des Gasumlaufkanals sich senkrecht zur Längsachse (A) erstreckt.

2. Messzelle nach Anspruch 1, **dadurch gekennzeichnet, dass** die Einlassöffnung (9) sich auf der Längsachse (A) befindet.

3. Messzelle nach Anspruch 1 oder 2, **dadurch gekennzeichnet, dass** das Gehäuse (5) zylindrisch geformt ist und koaxial zur Längsachse (A) der Ummantelung (10) positioniert ist.

4. Messzelle nach einem der vorhergehenden Ansprüche, **dadurch gekennzeichnet, dass** das Gehäuse (5) einen Teil (11), der einen Träger für den Wärmeleitfähigkeitssensor bildet, und eine Abdeckung (12), die den einen Träger bildenden Teil abdeckt, umfasst, und dass die Abdeckung (12) die Einlassöffnung (9) umfasst.

5. Messzelle nach einem der vorhergehenden Ansprüche, **dadurch gekennzeichnet, dass** die ersten und zweiten Teile (81, 82) des Kanals im Verhältnis zur Längsachse (A) symmetrisch sind.

6. Messzelle nach einem der vorhergehenden Ansprüche, **dadurch gekennzeichnet, dass** die ersten und zweiten Teile (81, 82) des Kanals Bestandteil der Ummantelung (10) sind.

7. Messzelle nach einem der vorhergehenden Ansprüche, **dadurch gekennzeichnet, dass** sie ferner ein Mittel (13) zum gleichmäßigen Erhitzen des in dem Kanal (4) umlaufenden Gases und des in der Messkammer (6) enthaltenen Gases umfasst.

8. Messzelle nach Anspruch 7, **dadurch gekennzeichnet, dass** die Ummantelung (10) aus einem wärmeleitfähigen Material besteht, und dass das Heizmittel (13) einen Widerstandsdraht umfasst, der um die Ummantelung (10) gewickelt ist.

9. Messzelle nach einem der vorhergehenden Ansprüche, **dadurch gekennzeichnet, dass** der Wärmeleitfähigkeitssensor (7) einen Chip (71) zum Messen der Wärmeleitfähigkeit und einen Temperaturfühler (72) umfasst.

10. Messzelle nach einem der vorhergehenden Ansprüche, **dadurch gekennzeichnet, dass** sie eine Außenschale (14) aus Kunststoffmaterial umfasst, und dass ein Isolierkranz zwischen der Ummantelung (10) und der Außenschale (14) angeordnet ist.

11. System (200) zum Messen der Wärmeleitfähigkeit eines Gases auf zwei Temperaturen, **dadurch gekennzeichnet, dass** es folgendes umfasst:
- eine erste und eine zweite Messzelle (1, 101, 102) nach Anspruch 10, und
- ein Organ zur thermischen Entkopplung (150), das eine Gasumlaufleitung (151) umfasst, welche die Gasausgangsöffnung (3) der ersten Messzelle (101) mit der Gaseingangsöffnung (2) der zweiten Messzelle (102) durch das thermische Entkopplungsorgan (150) hindurch in Verbindung setzt.

12. Messsystem nach Anspruch 11, **dadurch gekennzeichnet, dass** die Temperatur der ersten Messzelle (101) tiefer ist als die Temperatur der zweiten Messzelle (102), wobei das Gas von der ersten zu der zweiten Messzelle umläuft.

13. Messsystem nach Anspruch 11 oder 12, **dadurch gekennzeichnet, dass** das thermische Entkopplungsorgan (150) aus PEEK ist.

14. Gasanalysator (300), umfassend mindestens eine Zelle (1, 101, 102) zum Messen der Wärmeleitfähigkeit nach den Ansprüchen 1 bis 10.

15. Gasanalysator (300), **dadurch gekennzeichnet, dass** er folgendes umfasst:
- einen einstückigen Teil (301), der eine Eingangsöffnung (302) und eine Ausgangsöffnung (303) des Gases umfasst, und
- ein Messsystem (200) nach den Ansprüchen 11 bis 13,
wobei die Eingangsöffnung (302) des Analysators mit der Eingangsöffnung (2) der ersten Messzelle (101) in Verbindung steht und die Ausgangsöffnung (303) des Analysators mit der Ausgangsöffnung (3) der zweiten Messzelle (102) in Verbindung steht, um das Gas im Innern des Gasanalysators umlaufen zu lassen.

16. Gasanalysator (300) nach Anspruch 15, **dadurch gekennzeichnet, dass** die Eingangsöffnung (302) und die Ausgangsöffnung (303) des einstückigen Teils (301) sich auf derselben Ebene wie dieser Teil befinden.

17. Gasanalysator (300) nach Anspruch 15 oder 16, **dadurch gekennzeichnet, dass** die Eingangsöffnung (302) des Analysators mit der Eingangsöffnung (2) der ersten Messzelle (101) über das thermische Entkopplungsorgan (150) in Verbindung steht, und die Ausgangsöffnung (303) des Analysators mit der Ausgangsöffnung (3) der zweiten Messzelle (102) über das thermische Entkopplungsorgan (150) in Verbindung steht.

18. Gasanalysator (300) nach einem der Ansprüche 15 bis 17, **dadurch gekennzeichnet, dass** der einstückige Teil (301) einen Gasdrucksensor (320) umfasst, der dazu gedacht ist, den Druck des Gases zu messen, das im Innern des Gasanalysators umläuft.

19. Gasanalysator (300) nach einem der Ansprüche 15 bis 18, **dadurch gekennzeichnet, dass** er ein Unterdruck erzeugendes Organ (321) umfasst, das auf dem Gasweg zwischen der Messkammer (6) der zweiten Messzelle (102) und der Ausgangsöffnung (303) des Gasanalysators angeordnet ist.
